# EUROPÄISCHE PATENTANMELDUNG

(11) **EP 1 306 510 A2**
(43) Veröffentlichungstag der Anmeldung: **02.05.2003**
(21) Anmeldenummer: 02019383.5
(22) Anmeldetag: 29.08.2002
(51) Int. Cl.: E05F 15/10, E05F 15/16

(54) **Antrieb für Verschlusselemente**

(30) Priorität: 26.10.2001 DE 10152906
(71) Anmelder: Marantec Antriebs- und Steuerungstechnik GmbH & Co. KG., 33428 Marienfeld (DE)
(72) Erfinder: Hörmann, Michael, 33813 Oerlinghausen (DE)
(74) Vertreter: Laufhütte, Dieter, Dr.-Ing.

(57) **Zusammenfassung**

Die Erfindung betrifft einen Antrieb für Verschlußelemente, insbesondere im Bereich der Garagen- und Industrietore aber auch beispielsweise in Form von Rolläden, mit einem in dem Motor oder in dem Getriebe des Antriebs angeordneten Referenzwertgeber zur Ermittlung der tatsächlichen Position des Verschließelements. Der Referenzwertgeber gibt bei Erreichen einer Referenzpunktstellung ein Signal ab oder bewirkt eine Signaländerung, aufgrund derer der Istwertgeber kalibrierbar ist. Der Referenzwertgeber weist erfindungsgemäß zwei mit unterschiedlicher Geschwindigkeit umlaufende Referenzscheiben auf, die in vorbestimmten Winkelstellungen zueinander die Referenzpunktstellungen definieren, die über mindestens eine Abtasteinrichtung abtastbar sind.

## Beschreibung

Die Erfindung betrifft einen Antrieb für Verschlußelemente, insbesondere Garagenund Industrietore sowie beispielsweise auch Rolläden, mit einem in dem Motor oder in dem Getriebe des Antriebs angeordneten Referenzwertgeber zur Ermittlung der tatsächlichen Position des Verschlußelementes.

Ein derartiger Antrieb ist in Form eines Torantriebs bereits aus der DE 38 01 245 C bekannt. Der dort offenbarte Torantrieb umfaßt eine Geberscheibe, die an ein drehend angeordnetes Teil des Antriebsmotors mitdrehend angeschlossen ist und der eine Abtasteinrichtung zugeordnet ist, mittels derer die Drehbewegung der Geberscheibe in eine entsprechende Anzahl von Impulsen umgesetzt wird. Die Anzahl der Impulse wird von einer Zähleinrichtung erfaßt, deren Zählerstand einer vorgegebenen Position des Tores entspricht. Die Anordnung umfaßt ferner eine Referenzpunkt-Indikatorvorrichtung, die beispielsweise aus zumindest einem an der Torzarge befestigten Schalter und einem an dem Torblatt befestigten Betätigungselement besteht, durch das der Schalter bei dem Vorbeiführen des Tores an der entsprechenden Position der Zarge betätigt wird. Bei Betätigung des Schalters wird ein Synchronisiersignal erzeugt, das die Zähleinrichtung auf einen bestimmten Wert, beispielsweise auf den Eingabewert null zwangseinstellt. Der Torantrieb wird angehalten, wenn eine Vergleichseinstellung die Übereinstimmung zwischen einem Zählerwert und einem der gewünschten Torstellung entsprechenden Sollwert erfaßt. Alternativ zu einem an der Torzarge befestigten Schalter als Referenzpunktpunkt-Indikatorvorrichtung kann die Bewegung des Tores auch über ein Untersetzungsgetriebe auf eine Referenzpunkt-Indikatorvorrichtung abgebildet werden. Die Abbildung der Torbewegung durch ein Untersetzungsgetriebe kann aber zu einer vergleichsweise weniger exakten Auflösung des Bewegungsablaufs führen.

Aufgabe der Erfindung ist es, einen gattungsgemäßen Antrieb für Verschlußelemente derart weiterzubilden, daß mittels einfacher Mittel eine sehr genaue Angabe der aktuellen Torposition ermöglicht wird.

Diese Aufgabe wird erfindungsgemäß durch ein gattungsgemäßen Antrieb für Verschlußelemente mit der Merkmalskombination nach Anspruch 1 gelöst. Demnach weist der Antrieb einen in bzw. auf dem Motor oder in bzw. auf dem Getriebe des Antriebs angeordneten Referenzwertgeber zur Ermittlung der tatsächlichen Position des Verschlußelementes auf, wobei der Referenzwertgeber zwei mit unterschiedlicher Geschwindigkeit umlaufende Referenzscheiben aufweist, die in vorbestimmten Winkelstellungen zueinander Referenzpunktstellungen definieren, die über mindestens eine Abtasteinrichtung abtastbar sind. Diese Referenzpunktstellungen entsprechen eindeutig bestimmten Torpositionen. Da bestimmte Winkelstellungen der mit verschiedenen Geschwindigkeiten zueinander umlaufenden Referenzscheiben bestimmten Torpositionen entsprechen, ist je nach Wahl der geometrischen Zuordnung der Referenzscheibengröße bzw. des Aufbringens von Referenzpunkten auf den Referenzscheiben die Torbewegung in eine vorher bestimmbare Anzahl von Umdrehungen der Referenzscheiben abbildbar. Hierdurch wird eine hochgenaue Auflösung ermöglicht.

Besondere Ausgestaltungen der Erfindung ergeben sich aus den sich an den Hauptanspruch anschließenden Unteransprüchen. Demnach können die Referenzscheiben über ein Getriebe miteinander verbunden sein. Die Referenzscheiben können unterschiedliche Durchmesser aufweisen, wobei die Referenzscheibenmittelpunkte versetzt zueinander angeordnet sind.

Gemäß einer bevorzugten Ausführungsvariante kann die größere Referenzscheibe mit einem Zahnhohlrad verbunden sein, wobei die kleinere Referenzscheibe mit einem mit diesem Zahnhohlrad kämmenden Zahnrad derart verbunden sein kann, daß sich beide Referenzscheiben zumindestens in einem Bereich während der Drehung weitgehend überdecken. In diesem Überdeckungsbereich kann nach dieser bevorzugten Ausgestaltung der Erfindung mindestens eine Abtasteinrichtung angeordnet sein.

Auf den Referenzscheiben sind vorteilhaft Signalmarken in definierten Mustern abgelegt. Vorzugsweise bestehen diese Signalmarken aus Bohrungen und die entsprechenden Abtasteinrichtungen bestehen aus Lichtschranken, die bei Durchgang des Lichtes durch zwei sich überdeckende Bohrungen während der Drehung der Referenzscheiben Signale erzeugen.

Dabei können die Signalmarken aus in radialer oder auch in axialer Richtung parallel zueinander angeordneten und auf Umfang der Referenzscheiben verteilt angeordneten Bohrungsmustern bestehen, während auf der großen Referenzscheibe nur an einer Stelle parallele Bohrungen angeordnet sind, die im Zusammenspiel mit den Bohrungsmustern der kleineren Referenzscheibe unterschiedliche Signale in den Lichtschranken der Abtasteinrichtung in Abhängigkeit von der Winkelstellung erzeugen. Das Bohrungsmuster der großen Refernzscheibe dient somit als Blende, die jeweils nur nach einer Komplettumdrehung geöffnet wird, wobei hier jeweils unterschiedliche Bohrungsmuster, also unterschiedliche Codierungen, der kleineren Referenzscheibe sichtbar werden. Diese Codierungen sind bestimmten Positionen des Verschlußelementes zugeordnet. Grundsätzlich können die vorbeschriebenen Bohrungsmuster auch auf der jeweils anderen Referenzscheibe angeordnet sein.

Eine andere bevorzugte Ausgestaltung der Erfindung besteht darin, daß beide Referenzscheiben jeweils über einen Teil - vorzugsweise die Hälfte - ihres Umfanges verbreitert sind und daß die kleine Referenzscheibe auf Umfang verteilt angeordnete Signalmarken aufweist, während die große Referenzscheibe jeweils eine Signalmarke aufweist.

Auch bei dieser Ausführungsvariante können die Signalmarken vorzugsweise Bohrungen sein und die Abtasteinrichtung kann aus zwei Lichtschranken bestehen. Die innen liegende Lichtschranke kann diejenige sein, welche eine komplette Umdrehung der größeren Referenzscheibe erfaßt. Die außen liegende Lichtschranke erfaßt unterschiedliche Überlagerungen der über den halben Umfang der Scheibe verlaufende Verbreiterungen, d. h. der zum Beispiel halbkreisförmigen Kränze. So wird für jede Umdrehung ein typisches Bitmuster erzeugt. Grundsätzlich können anstelle der halbkreisförmigen Kränze auch mehrere Segmente als entsprechende Verbreiterungen vorgesehen sein.

Ganz besonders vorteilhaft kann der Referenzwertgeber über ein Schneckengetriebe angetrieben sein. Dabei kann auf der Schneckenwelle mindestens ein Sensor angeordnet sein, der über eine Geberscheibe ein der Umdrehungsgeschwindigkeit der Schneckenwelle entsprechendes Taktsignal erzeugt. Über dieses Taktsignal kann vorzugsweise die äußere Lichtschranke der Abtasteinrichtung getaktet werden. Durch diese Taktung kann die Abnutzung des Schneckenrades erfasst werden, damit größer werden in der Abnutzung das an der Schneckenwelle erzeugte Signal immer später zu einem Impuls, beispielsweise "Lichtimpuls" an den Referenzscheiben führt. Dieser Effekt kann gleichzeitig zur Abnutzungsüberwachung des Schneckenrades in vorteilhafter Weise eingesetzt werden. Eine übermäßige Abnutzung des Schneckenrades kann angezeigt werden, die zur Abschaltung und zum Erzeugen eines Warnsignals nutzbar ist. Bei dieser Ausgestaltung der Erfindung ist also gleichzeitig eine Sicherheitseinrichtung zur Anzeige des Zustands des Getriebes realisiert. In diesem Fall kann auf das Vorsehen einer zusätzlichen Fangvorrichtung für das Verschlußelement, wie sie aus dem Stand der Technik als zusätzliche Sicherheitseinrichtung bekannt ist, verzichtet werden, da der Fall der vollständigen Abnutzung des Schneckenrades und des damit verbundenen Versagens der Haltefunktion des Getriebes sicher verhindert werden kann. Wählt man die Signalmarken, also vorzugsweise die Bohrungen, als langgestreckte Signalmarke, also beispielsweise als Langloch mit einer bestimmten Öffnungslänge, kann man eine vorbestimmte Abnutzung des Schneckenrades berücksichtigen, ohne dass eine Fehlermeldung ausgegeben wird.

Der Begriff Verschlusselement ist im Kontext der Erfindung umfassend zu verstehen und betrifft als Garagen- und Industrietore neben Sektionaltoren, vollflächigen Toren und Rolltoren auch beispielsweise Drehtore, Schiebetore, etc. und insbesondere auch Rolläden.

Eine alternative Lösung der eingangs genannten Aufgabe wird durch einen gattungsgemäßen Antrieb für Verschlußelemente mit der Merkmalskombination nach Anspruch 13 gelöst. Hier sind anstelle der in der Lösung nach Anspruch 1 aufgeführten umlaufenden Referenzscheiben zwei Zahnriemen unterschiedlicher Länge im Referenzwertgeber integriert. Die Zahnriemen haben gegenüber den Referenzscheiben den Vorteil, daß sie in ihrer Form flexibel sind und daher wesentlich platzsparender einbaubar sind. Insbesondere ermöglichen sie es, einen zur Verfügung stehenden Raum im entsprechenden Antriebsgehäuse flexibel zu nutzen.

Bevorzugte Ausgestaltungen dieser alternativen Lösung ergeben sich aus den Ansprüchen 14 bis 20.

Weitere Einzelheiten und Vorteile der Erfindung werden anhand von zwei in der folgenden Zeichnung dargestellten Ausführungsbeispielen näher erläutert. Es zeigen:
- die Fig. 1 bis 3:: den schematischen Aufbau eines Teils eines Torantriebs nach einer ersten Ausführung der Erfindung,
- die Fig. 4 bis 10:: unterschiedliche Winkelstellungen der Referenzscheiben des Torantriebs gemäß der Fig. 1 bis 3,
- die Fig. 11 bis 13:: eine alternative Ausführungsvariante eines erfindungsgemäßen Torantriebs in vereinfachter Form,

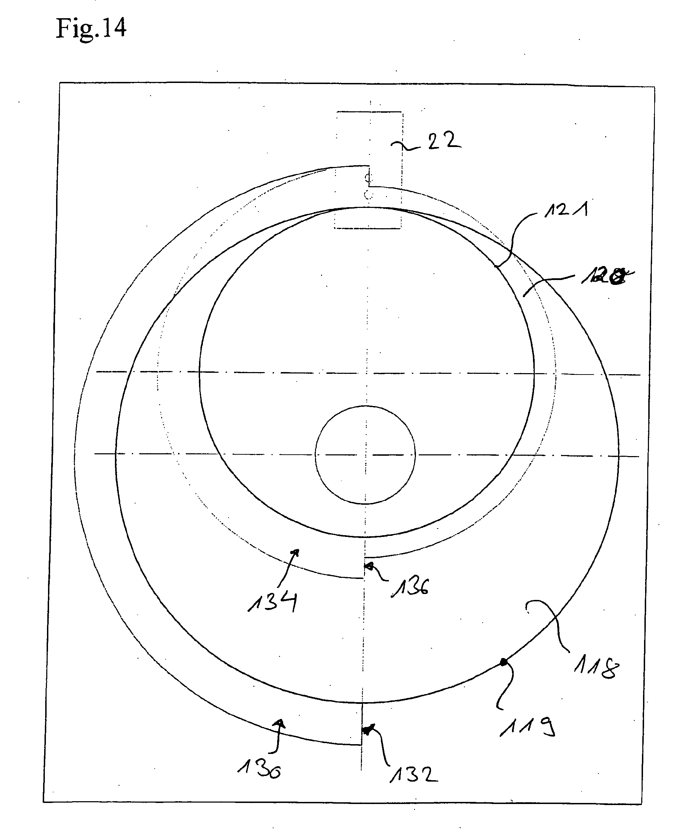

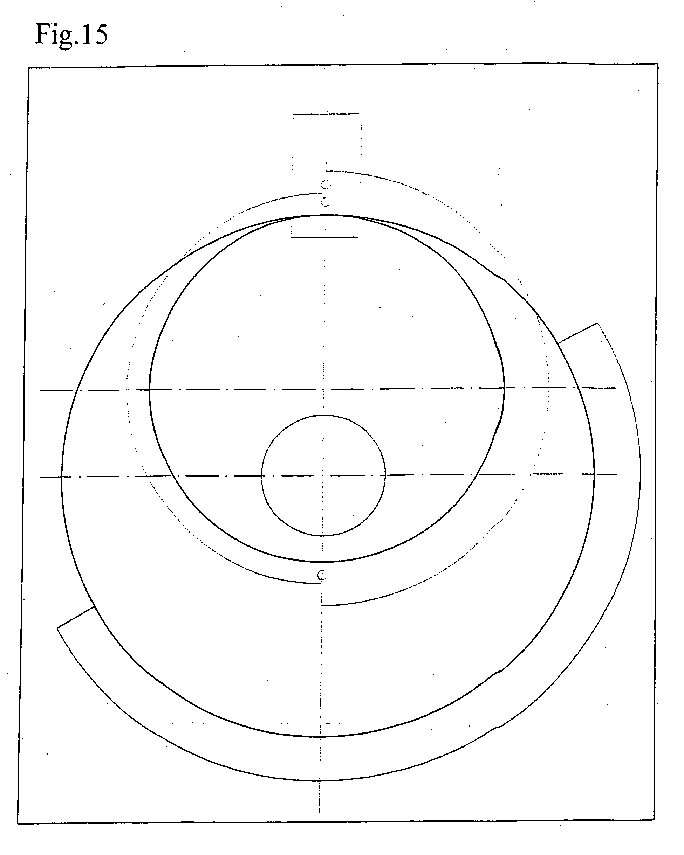

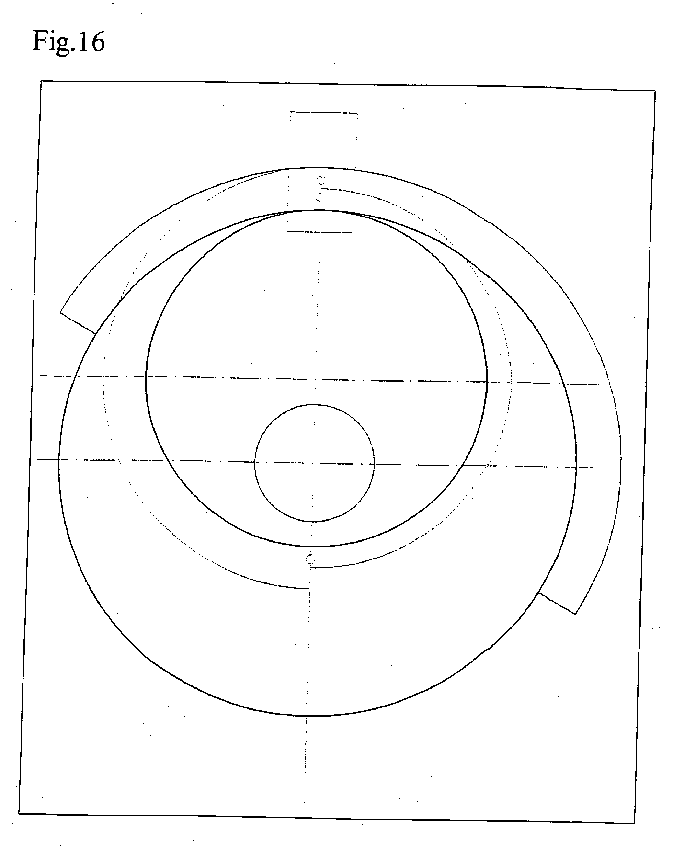

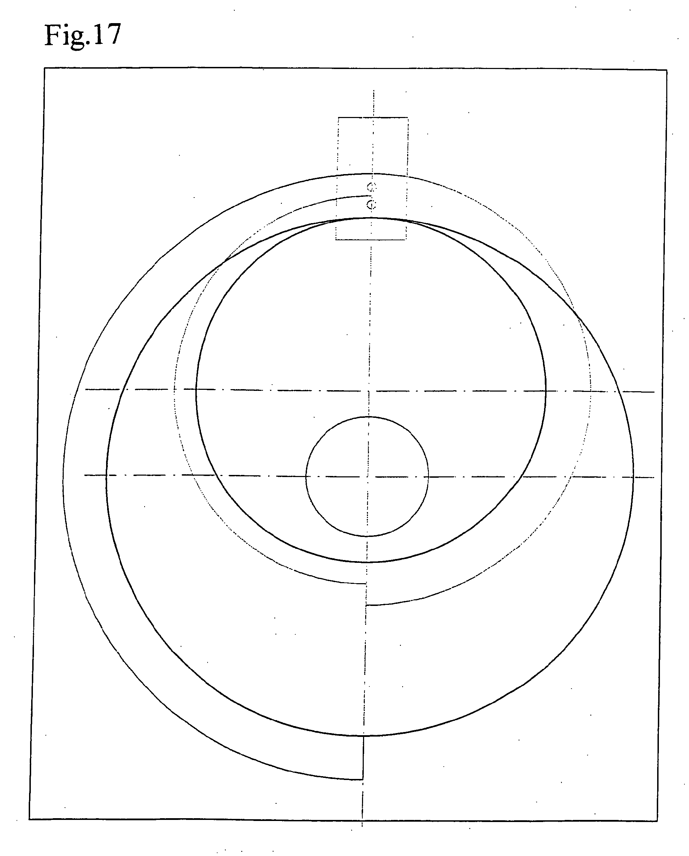

- die Fig. 14 bis 17:: unterschiedliche Winkelstellungen von Referenzscheiben des Torantriebs gemäß der Fig. 11 bis 13, und
- die Fig. 18:: eine perspektivische Darstellung einer weiteren alternativen Ausführungsform eines erfindungsgemäßen Torantriebs in vereinfachter Form.

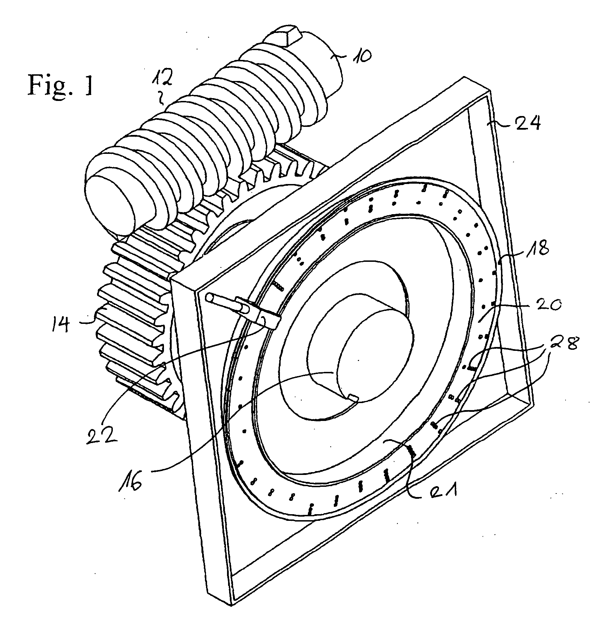

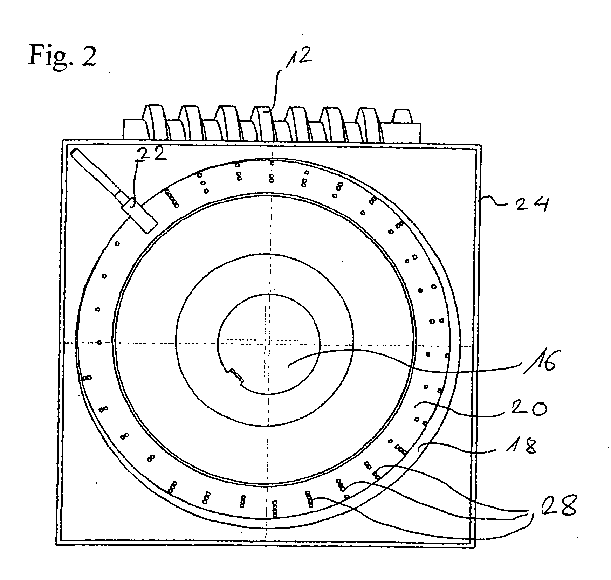

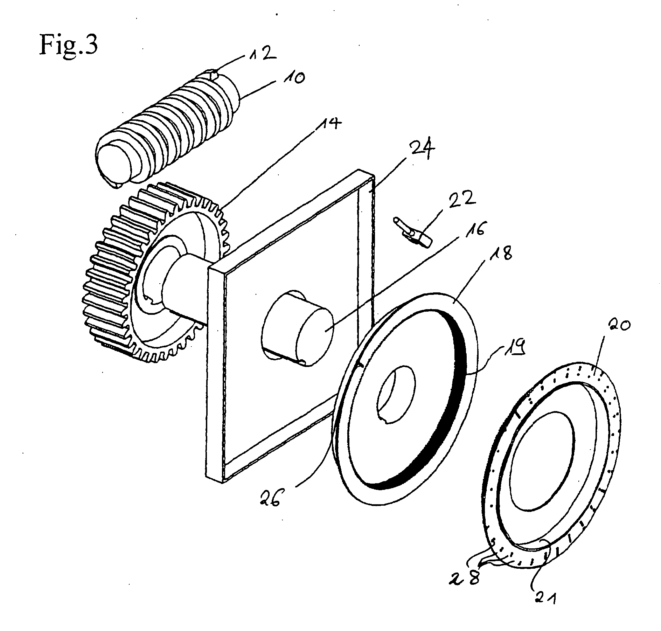

In den Figuren 1 bis 3 ist der schematische Aufbau eines Teils eines Torantriebs nach einer ersten Ausführungsform der Erfindung gezeigt. Vom hier nicht näher dargestellten Antriebsmotor wird über eine Schneckenwelle 10 eine Schnecke 12 angetrieben, die mit einem Zahnrad 14 kämmt. Mit dem Zahnrad ist eine Welle 16 verbunden, auf dem wiederum verdrehfest eine erste Referenzscheibe 18 sitzt. Der genaue Aufbau der Referenzscheibe gemäß der hier vorliegenden Ausführungsvariante kann am einfachsten in der explosionsartig auseinandergezogenen Darstellung gemäß Fig. 3 erkannt werden. Die Referenzscheibe 18 ist hier gleichzeitig als Zahnhohlrad mit einem Zahnkranz 19 ausgebildet. An diesen Zahnhohlkranz 19 schließt flanschartig ein Rand an. In diesem Rand sind im hier dargestellten Ausführungsbeispiel vier in einer Reihe liegende Bohrungen 26 angeordnet. Dieser Referenzscheibe 18 ist eine zweite Referenzscheibe 20 zugeordnet, die ein geringfügig kleineren Durchmesser aufweist. Diese Referenzscheibe weist ebenfalls einen Absatz 21 auf, der außen verzahnt ist, so daß ein Zahnrad gebildet wird, welches in dem Zahnhohlrad 19 umläuft. In Folge wird dieser verzahnte Absatz 21 der Einfachheit halber als Zahnrad 21 bezeichnet. An dem Zahnrad 21 ist als Teil der Referenzscheibe 20 ebenfalls ein flanschartiger Absatz angeformt, in welchem auf Umfang gleich verteilt unterschiedliche Bohrungsmuster 28 angeordnet sind. An der Stelle, an der die jeweiligen rundumlaufenden flanschartigen Ansätze der Referenzscheiben 18 bzw. 20 sich weitgehend überdecken, ist eine Abtasteinrichtung 22 angeordnet, die im hier dargestellten Ausführungsbeispiel in nicht näher gezeigter Art und Weise vier parallel nebeneinander liegende Lichtschranken aufweist, die zu den Bohrungen 26 bzw. den Bohrungsmustern 28 korrespondiert. Wenn hier also entsprechende Bohrungen übereinander im Bereich der Abtasteinrichtung 22 liegen, wird ein entsprechendes Signal erzeugt. Aufgrund der nebeneinanderliegenden Bohrungen wird somit ein Bitmuster generiert, daß einer bestimmten Stellung des angetriebenen Verschlußelementes, also beispielsweise eines Garagentores, zugeordnet werden kann. Die beiden Referenzscheiben 18 und 20 sind zusammen mit der Abtasteinrichtung 22 in einem Gehäuse 24 angeordnet.

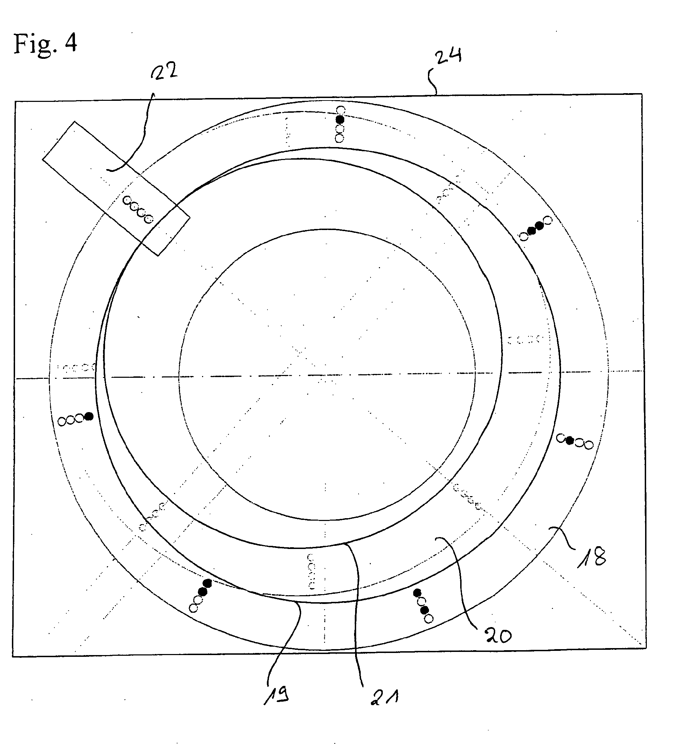

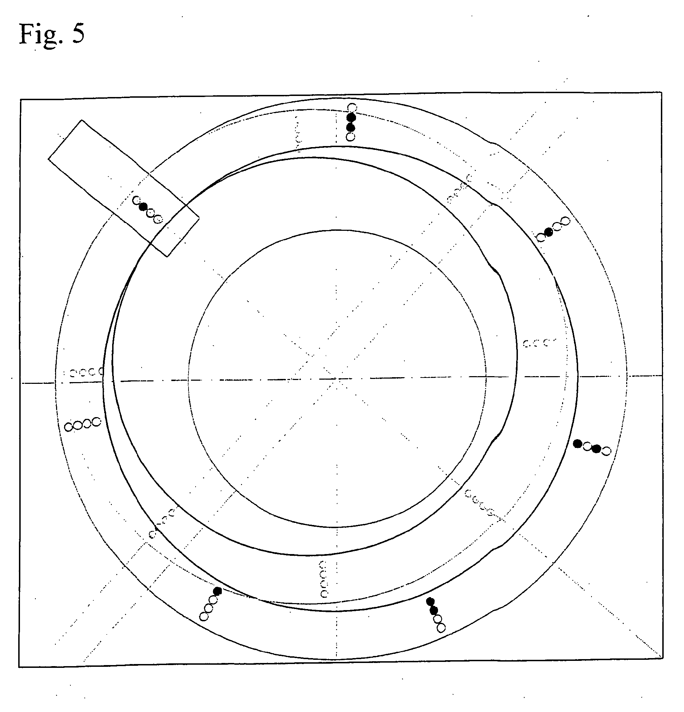

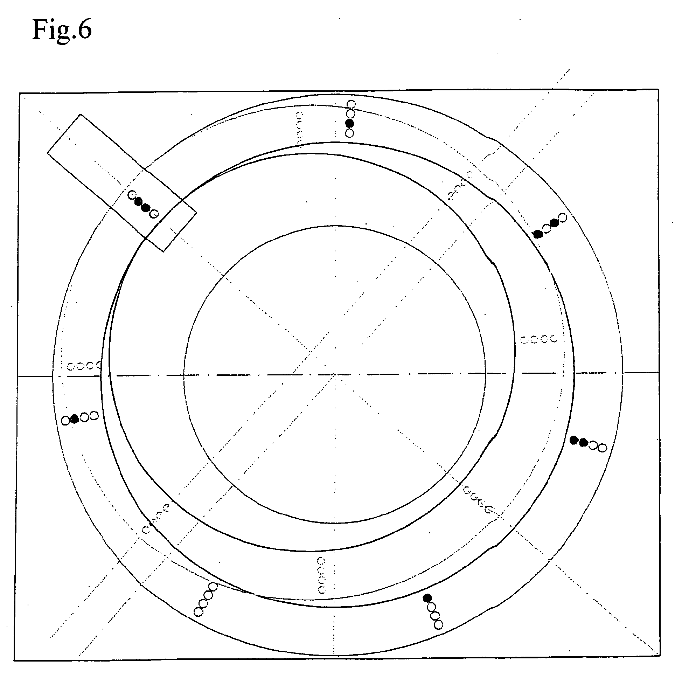

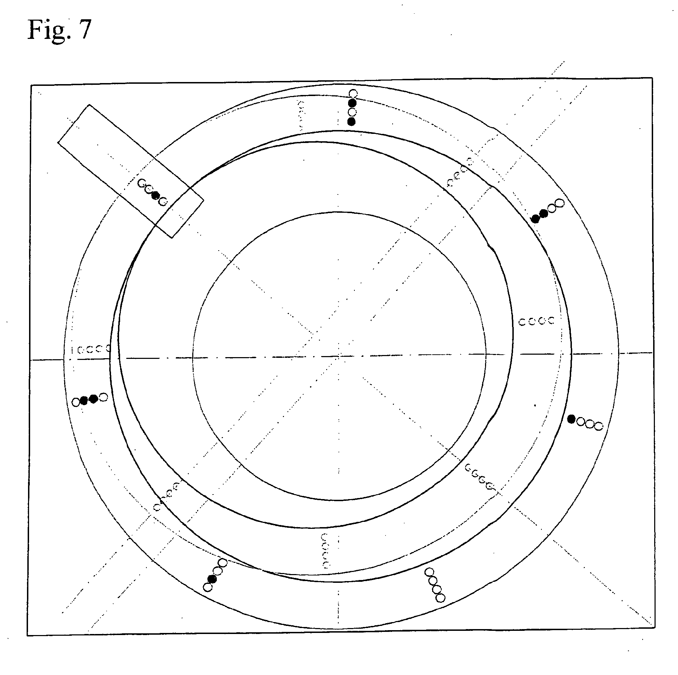

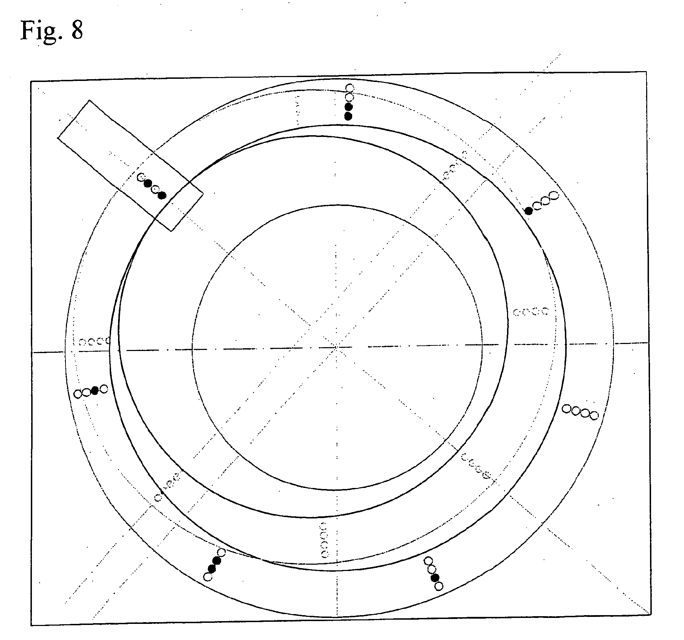

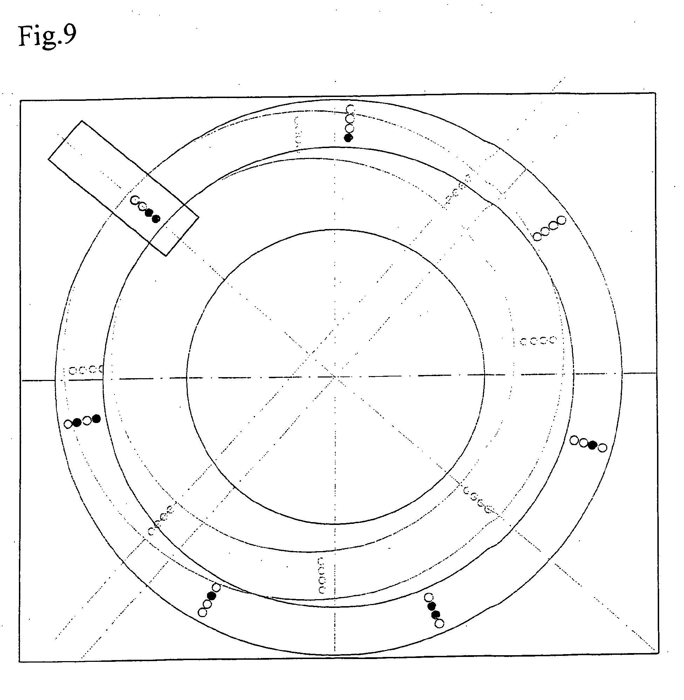

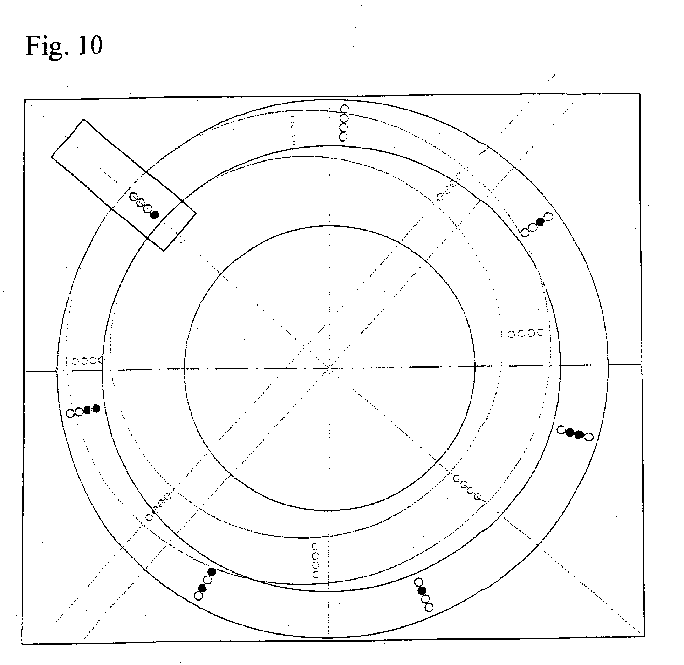

Anhand der Fig. 4 bis 10 ist beispielhaft die Zuordnung der jeweiligen Bohrungen zueinander anhand eines Beispiels dargestellt. Die einzelnen Figuren unterscheiden sich dadurch, daß hier unterschiedliche Winkelpositionierungen der Scheiben 18 bzw. 20 zueinander dargestellt sind. Im hier dargestellten Beispiel sind bei der Abtasteinrichtung 22, wie zuvor beschrieben, vier parallel zueinander angeordnete Lichtschranken vorgesehen. Die äußere Lichtschranke dient der Erfassung einer kompletten Umdrehung. Die restlichen drei Lichtschranken dienen zur Abtastung der N = 7 unterschiedlichen Codierungen der äußeren Referenzscheibe 20. Bei dem hier dargestellten Beispiel ist die Anzahl der Umdrehung N = 7 gewählt, die Zähnezahldifferenz D beträgt 13, das zur Referenzscheibe 18 gehörige Zahnrad (Hohlrad) 19 weist 91 Zähne auf, während das zu der Referenzscheibe 20 gehörige Zahnrad 21 78 Zähne aufweist. Der Teilkreisdurchmesser D₁ betrifft bei einem Modul m = 0,6 54,6 während der Teilkreisdurchmesser D2 = 46,8 beträgt. Durch das Übersetzungsverhältnis dreht sich das kleine Rad acht mal (entspricht N +1). Das Lochmuster 26 der größeren Referenzscheibe 18 dient hier als Blende für das Lochmuster der kleineren Referenzscheibe 20.

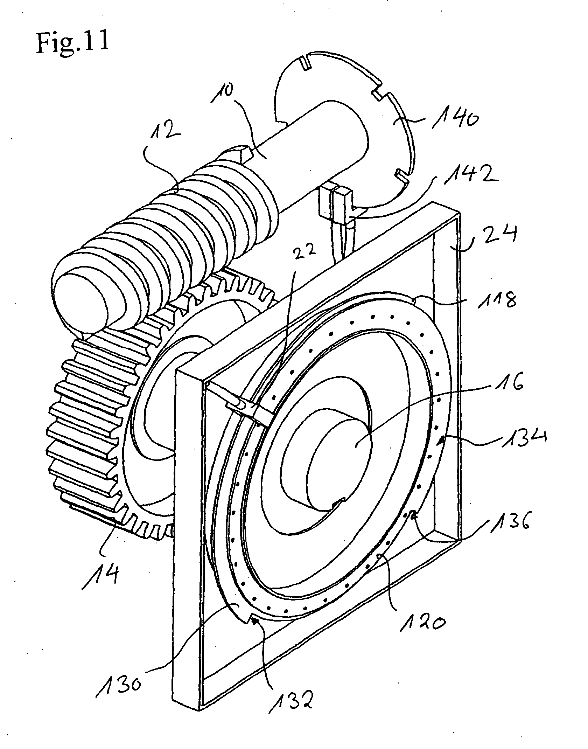

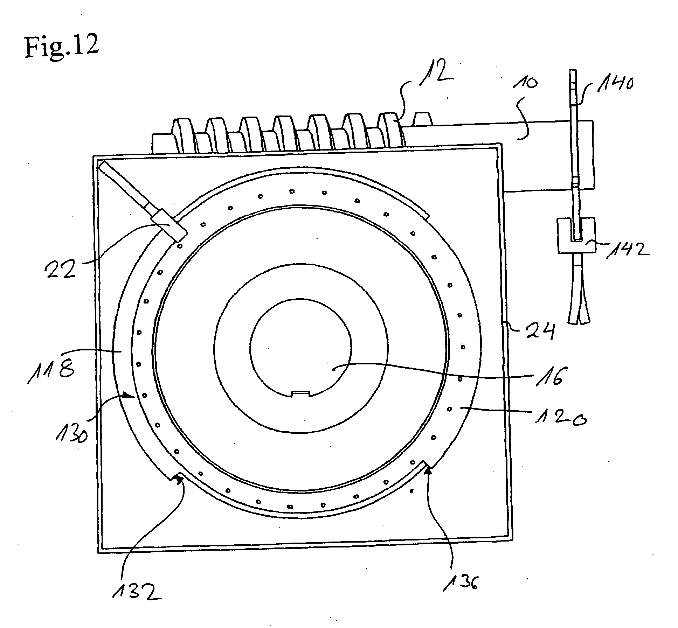

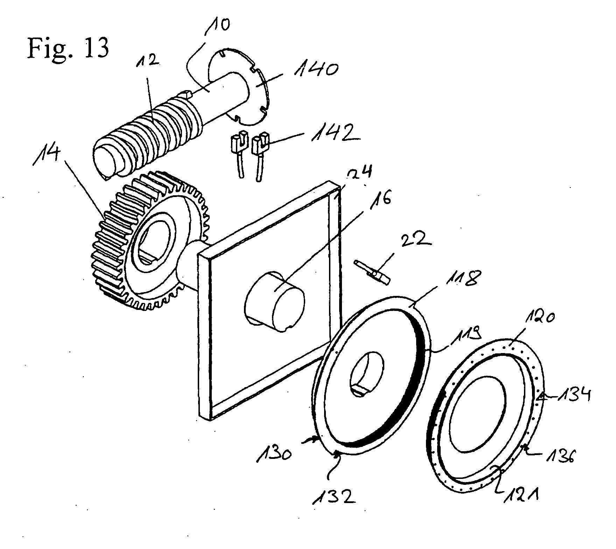

In den Fig. 11 bis 13 ist eine alternative Ausführungsform der Erfindung dargestellt. Hier ist in gleicher Weise eine Schneckenwelle 10 mit Schnecke 12 vorhanden, die mit einem Zahnrad 14 kämmt. Das Zahnrad 14 ist auf einer Hohlwelle 16 gelagert, auf der wiederum eine Referenzscheibe 118 aufgesetzt ist. Diese Referenzscheibe weist in ähnlicher Weise wie in der zuvor beschriebenen Ausführungsvariante ein Zahnhohlrad 119 auf, an welches flanschartig ein Rand angesetzt ist. Bei der Referenzscheibe 118 ist hier allerdings, wie beispielsweise in den Fig. 11 bis 13 dargestellt, der flanschartige Rand über die Hälfte des Umfangs verbreitert, wobei der Übergang zu diesem verbreiterten Randbereich 130 durch eine Unstetigkeitsstelle in Form von Stufen 132 gebildet ist. Der Referenzscheibe 118 ist eine Referenzscheibe 120 kleineren Durchmessers zugeordnet. Diese weist ebenfalls einen Absatz 121 auf, der außen mit einer Verzahnung versehen ist, so daß dieser Absatz 121 ein Zahnrad bildet, das in dem Zahnhohlrad 119 umläuft. An dem Absatz 121 setzt wiederum ein flanschartiger Rand an, der ähnlich wie bei der Referenzscheibe 118 im Bereich der Hälfte des Umfangs als Verbreiterung 134 ausgebildet ist, die ebenfalls an ihren Übergangsstellen unstetig in Form eines Absatzes 136 zurückspringt. An einer Stelle, an der sich jeweils die flanschartigen Randbereiche der Referenzscheiben 118 und 120 weitgehend überdecken, ist eine Abtasteinrichtung 22 angeordnet.

In der kleineren Referenzscheibe 120 sind auf Umfang gleich verteilt mehrere Bohrungen angeordnet, während die größere Referenzscheibe 118 eine Bohrung enthält. Folgende geometrische Zuordnungen der Referenzscheiben 118 und 120 gelten zueinander. Geht man von einer Umdrehungszahl N und einer Zähnezahldifferenz zwischen dem Zahnhohlrad 119 und dem Zahnrad 121 von D aus, ergibt sich für das Zahnhohlrad 119 die Zähnezahl Z₁ = D x N. Demgegenüber ist die Zähnezahl des Zahnrades 121 Z₂ = Z₁ - D.

Im hier dargestellten Ausführungsbeispiel wird von einer Umdrehungszahl N = 3 ausgegangen. Die Zähnezahldifferenz D ist 5. Das Zahnhohlrad 119 weist Z₁ = 15 Zähne auf und das Zahnrad 121 Z₂ = 10. Unter Berücksichtigung eines Moduls m = 2 ergibt sich ein Teilkreisdurchmesser für das Zahnhohlrad 119 von 30 und für das Zahnrad 121 von 20. Bei der hier dargestellten Lösung befindet sich die Referenzscheibe 118 nach drei Umdrehungen und die Referenzscheibe 120 nach vier Umdrehungen wieder in ihrer Ausgangsstellung. Im hier vorliegenden Fall wird durch die Abtasteinrichtung 22 mittels der bezogen auf die Referenzscheiben innen liegende Lichtschranke, eine komplette Umdrehung der Referenzscheibe 118 erfaßt, während die äußere Lichtschranke der Abtasteinrichtung 22 unterschiedliche Überlagerungen der halbkreisförmigen flanschartigen Verbreiterungen 130 bzw. 134 erfaßt und so für jede Umdrehung ein typisches Bitmuster erzeugt, das einer bestimmten Stellung des Verschlußelementes, d. h. des Garagentores, entspricht.

Gemäß der hier dargestellten Ausführungsvariante wird die äußere Lichtschranke der Abtasteinrichtung 22 durch einen Sensor 142 an der Schneckenwelle 10 getaktet. Dieser optische Sensor 142 erfaßt zusammen mit einem geschlitzten Geberrad 140, das drehfest mit der Schneckenwelle 10 verbunden ist, die Umdrehungsgeschwindigkeit der Schneckenwelle, d. h. es wird in Abhängigkeit von der Umdrehungsgeschwindigkeit der Schneckenwelle ein Taktsignal erzeugt, mit dem die äußere Lichtschranke der Abtasteinrichtung 22 getaktet wird. Hierdurch kann die Abnutzung der Schnecke 12 erfasst werden. Hiermit gekoppelt kann bei Feststellen einer größeren Abnutzung der Schnecke 12 ein entsprechendes Servicesignal ausgegeben werden oder der Motor kann zwangsabgeschaltet werden, um eine Fehlfunktion des Getriebes, d. h. des Eingriffs des Schneckenrades 12 in das Zahnrad 14 sicher zu verhindern.

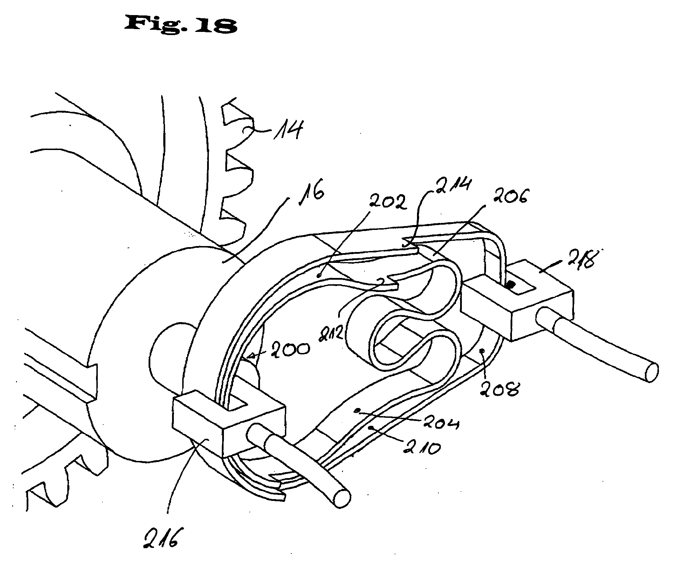

In Figur 18 ist eine alternative Lösung für einen Referenzwertgeber zur Ermittlung der tatsächlichen Position des Verschlußelementes dargestellt. Hier besteht der Referenzwertgeber im wesentlichen zunächst aus denselben Teilen wir in Figur 1, nämlich einer hier nicht näher dargestellten Schneckenwelle und Schnecke, die mit einem Zahnrad 14 kämmt. Aus Vereinfachungsgründen ist in Figur 18 lediglich das Zahnrad 14 gezeigt. Mit dem Zahnrad 14 ist auch in der hier dargestellten Ausführungsvariante eine Welle 16 verbunden, auf der in der hier dargestellten Ausführung allerdings ein Zahnrad 200 sitzt. Mit diesem Zahnrad kämmt die Innenverzahnung eines Zahnriemens 202, der nicht nur eine Innenverzahnung 204, sondern auch eine Außenverzahnung 206 aufweist. Die Außenverzahnung 206 des ersten Zahnriemens 202 kämmt mit einer Innenverzahnung 208 eines zweiten Zahnriemens 210. Die Zahnriemen 202 und 210 haben eine unterschiedliche Länge, wie dies in Figur 18 angedeutet ist. Sie werden also durch Antrieb des Zahnrades 200 beide angetrieben. Aufgrund der Zahndifferenz zwischen dem Zahnriemen 202 und dem Zahnriemen 210 tritt nun, ähnlich wie bei den vorher beschriebenen Ausführungsformen mit den Referenzscheiben, bei jeder Umdrehung ein Versatz um die Zähnezahldifferenz auf. Zusätzlich weisen die Zahnriemen 202 und 206 über einen Teil ihrer Länge eine seitliche Verbreiterung 212 bzw. 214 auf. Der Übergang vom schmalen Teil der Zahnriemen zum breiten Teil der Zahnriemen erfolgt unstetig, d. h. absatzförmig.

Es sind nun zwei Lichtschranken 216 und 218 vorhanden, wobei die erste Lichtschranke 216 beide Zahnriemen überdeckt und wobei die zweite Lichtschranke 218 jeweils detektiert, ob der Zahnriemen 210 eine vollständige Umdrehung absolviert hat. Für die vollständige Umdrehung des zweiten Zahnriemens 210 ergeben sich unterschiedliche bit-Muster, aus denen sich die aktuelle Position des Verschlußelementes bestimmen läßt.

## Patentansprüche

1. Antrieb für Verschlußelemente, insbesondere Garagen- und Industrietore sowie beispielsweise Rolläden, mit einem in bzw. auf dem Motor oder in bzw. auf dem Getriebe des Antriebs angeordneten Referenzwertgeber zur Ermittlung der tatsächlichen Position des Verschlußelementes,
**dadurch gekennzeichnet,**
**daß** der Referenzwertgeber zwei mit unterschiedlicher Geschwindigkeit umlaufende Referenzscheiben aufweist, die in vorbestimmten Winkelstellungen zueinander die Referenzpunktstellungen definieren, die über mindestens eine Abtasteinrichtung abtastbar sind.

2. Antrieb nach Anspruch 1, **dadurch gekennzeichnet, daß** die Referenzscheiben über ein Getriebe miteinander verbunden sind.

3. Antrieb nach Anspruch 1 oder Anspruch 2, **dadurch gekennzeichnet, daß** die Referenzscheiben unterschiedliche Durchmesser aufweisen und daß die Referenzscheibenmittelpunkte versetzt zueinander angeordnet sind.

4. Antrieb nach Anspruch 3, **dadurch gekennzeichnet, daß** die größere Referenzscheibe mit einem Zahnhohlrad verbunden ist, daß die kleinere Referenzscheibe mit einem mit diesem Zahnhohlrad kämmenden Zahnradkranz derart verbunden ist, daß sich beide Referenzscheiben zumindest in einem Bereich während der Drehung weitgehend überdecken und daß in diesem Überdeckungsbereich die mindestens eine Abtasteinrichtung angeordnet ist.

5. Antrieb nach einem der Ansprüche 1 bis 4, **dadurch gekennzeichnet, daß** auf den Referenzscheiben Signalmarken in definierten Mustern abgelegt sind.

6. Antrieb nach Anspruch 5, **dadurch gekennzeichnet, daß** die Signalmarken aus Bohrungen bestehen, und daß die mindestens eine Abtasteinrichtung aus Lichtschranken besteht.

7. Antrieb nach Anspruch 6, **dadurch gekennzeichnet, daß** die Signalmarken aus in radialer oder in axialer Richtung parallel zueinander angeordneten und auf Umfang der Referenzscheiben verteilt angeordneten Bohrungsmustern bestehen.

8. Antrieb nach Anspruch 7, **dadurch gekennzeichnet, daß** die Bohrungsmuster auf der kleineren Referenzscheibe auf Umfang verteilt angeordnet sind, während auf der großen Referenzscheibe nur an einer Stelle parallele Bohrungen angeordnet sind, die im Zusammenspiel mit den Bohrungsmustern der kleineren Referenzscheibe unterschiedliche Signale in den Lichtschranken der Abtasteinrichtung in Abhängigkeit von der Winkelstellung der beiden Referenzscheiben erzeugen.

9. Antrieb nach einem der Ansprüche 1 bis 4, **dadurch gekennzeichnet, daß** beide Referenzscheiben jeweils über einen Teil, vorzugsweise die Hälfte, ihres Umfanges verbreitert sind, und daß die kleinere Referenzscheibe auf Umfang verteilt angeordnete Signalmarken aufweist, während die große Referenzscheibe jeweils eine Signalmarke aufweist.

10. Antrieb nach Anspruch 9, **dadurch gekennzeichnet, daß** die Signalmarken Bohrungen sind und daß mindestens eine Abtasteinrichtung zwei Lichtschranken aufweist.

11. Antrieb nach einem der Ansprüche 1 bis 9, **dadurch gekennzeichnet, daß** der Referenzwertgeber über ein Schneckenradgetriebe angetrieben ist.

12. Antrieb nach Anspruch 10, **dadurch gekennzeichnet, daß** an der Schneckenwelle ein Sensor zum Takten einer der Lichtschranken der Abtasteinrichtung angeordnet ist.

13. Antrieb für Verschlußelemente, insbesondere Garagen- und Industrietore sowie beispielsweise Rolläden, mit einem in bzw. auf dem Motor oder in bzw. auf dem Getriebe des Antriebs angeordnete Referenzwertgeber zur Ermittlung der tatsächlichen Position des Verschlußelementes,
**dadurch gekennzeichnet,**
**daß** der Referenzwertgeber zwei unterschiedlich lange Zahnriemen aufweist, von denen ein Zahnriemen eine Innenverzahnung und eine Außenverzahnung aufweist und ein zweiter Zahnriemen nur eine Innenverzahnung, daß die beiden Zahnriemen in vorbestimmten Positionen zueinander die Referenzpunktstellungen definieren, die bei mindestens einer Abtasteinrichtung abtastbar sind.

14. Antrieb nach Anspruch 13, **dadurch gekennzeichnet, daß** auf den Zahnriemen Signalmarken in definierten Mustern abgelegt sind.

15. Antrieb nach Anspruch 14, **dadurch gekennzeichnet, daß** die Signalmarken aus seitlichen stufenartigen Verbreiterungen bestehen und daß sie mindestens eine Abtasteinrichtung aus einer Lichtschranke besteht.

16. Antrieb nach einem der Ansprüche 13 bis 15, **dadurch gekennzeichnet, daß** zwei Abtasteinrichtungen vorgesehen sind.

17. Antrieb nach einem der Ansprüche 13 bis 16, **dadurch gekennzeichnet, daß** die Linienverzahnungen der Zahnriemen als Signalmarken dienen.

18. Antrieb nach einem der Ansprüche 13 bis 17, **dadurch gekennzeichnet, daß** beide Zahnriemen jeweils über einen Teil ihrer Länge seitlich verbreitert sind.

19. Antrieb nach einem der Ansprüche 13 bis 18, **dadurch gekennzeichnet, daß** der Referenzwertgeber über ein Schneckenradgetriebe angetrieben ist.

20. Antrieb nach Anspruch 19, **dadurch gekennzeichnet, daß** an der Schneckenwelle ein Sensor zum Takten einer der Lichtschranken der Abtasteinrichtung angeordnet ist.
